# EUROPÄISCHE PATENTANMELDUNG

(11) **EP 1 092 904 A1**
(43) Veröffentlichungstag der Anmeldung: **18.04.2001**
(21) Anmeldenummer: 00115877.3
(22) Anmeldetag: 25.07.2000
(51) Int. Cl.: F16L 17/025, F16L 21/03

(54) **Dichtring für eine Steckmuffenverbindung zweier Rohre**

(30) Priorität: 15.10.1999 DE 19949864
(71) Anmelder: M.O.L. GUMMIVERARBEITUNG GMBH & Co. KG, D-49377 Vechta (DE)
(72) Erfinder: Lamping, Alwin, 49393 Lohne (DE)
(74) Vertreter: Meyer, Ludgerus A., Dipl.-Ing.

(57) **Zusammenfassung**

Die Erfindung betrifft einen Dichtring für eine Steckmuffenverbindung zweier Rohre mit zwei umlaufenden Verstärkungsringen, die sich in nach innen gerichteten offenen Ausnehmungen des Dichtringes befinden. Es sind zwei spiegelbildlich zueinander gerichtete Dichtlippen (2, 3) vorgesehen. Der Dichtring ist in Bezug auf eine radiale Symmetrieebene (1) spiegelbildlich aufgebaut, wobei beim Einsetzen des Spitzendes eines Rohres in eine mit der Dichtung versehene Muffe die zweite Dichtlippe (3) sich auf die erste Lippendichtung (2) auflegt und die Lippendichtung (2) auf einer Andruckdichtung (14) zur Anlage kommt. Der erfindungsgemäße Dichtring ist insbesondere für Kunststoffrohre mit Durchmessern ab 250 mm geeignet und ergibt einerseits eine hohe Dichtfunktion und andererseits verhindert er den Verlust aus einer Muffe. Durch den spiegelbildlichen Aufbau erfordert der Dichtring keine vorgeschriebene Einbaurichtung.

## Beschreibung

Die Erfindung betrifft einen Dichtring mit umlaufender Verstärkung für eine Steckmuffenverbindung zweier Rohre nach dem Oberbegriff des Anspruchs 1.

Dichtringe dieser Art werden normalerweise zur Verbindung zweier Rohre, wie Kunststoff-Abwasserrohre, verwendet, die in Ringsicken des Muffenendes eines Rohres eingesetzt werden. Wenn das Spitzende eines zweiten Rohres in das Muffenende des ersten Rohres eingeschoben wird, legen sich die Dichtlippen der Dichtung eng an das einzuschiebende Rohr an, so daß in der Regel die Abdichtung gewährleistet ist.

Da der Verstärkungsring eines derartigen Dichtrings relativ starr ist, und beispielsweise aus Stahl oder Kunststoff besteht, werden derartige Dichtringe bereits bei der Herstellung des Rohres in die Ringsicken der Muffen eingesetzt. Damit ist in der Regel auch eine Unverlierbarkeit der Dichtung gewährleistet und es ist auch sichergestellt, daß die Gefahr von Verschmutzungen zwischen Dichtring und Sickengrund der Muffe verringert ist, wie es insbesondere im rauhen Baustellenbetrieb sonst leicht möglich wäre.

Aus der DE 197 13 329 A1 ist ein Dichtring für Steckmuffenverbindungen mit einem Verstärkungsring bekannt, bei dem die Dichtlippe unter einem Neigungswinkel schräg zum Lippensockel verläuft und der Dichtring auf der der Lippendichtung gegenüberliegenden Seite eine Endverdickung aufweist, auf der beim Einschieben des Spitzendes eines Rohres ein Teil der Lippendichtung zur Auflage kommt. Hierdurch wird die Endverdickung zusammengedrückt und erhöht damit die Andruckkraft der Lippendichtung.

Bei dieser bekannten Art von Dichtringen weist die Dichtung lediglich eine einzige Abdichtlippe auf, die an dem einzuschiebenden Spitzende eines Rohres anliegt. Es besteht daher die Gefahr, daß mögliche Verschmutzungen der Lippendichtung zu einer Undichtigkeit der Rohrverbindung führen. Ferner ergibt sich beim Ablenken der Lippendichtung aufgrund des einzuschiebenden Spitzendes eine starke Verkeilung des Lippengrundes an einer Kante des Verstärkungsrings, so daß leicht die Gefahr einer Beschädigung der Lippendichtung besteht.

Auch die aus der EP 0 451 900 B1 bekannte Dichtung zeigt bereits eine Endverdickung, die den eingesetzten Verstärkungsring zum Teil überragt. Durch eine besondere Gestaltung der Lippendichtung wird dabei jedoch vermieden, daß eine Keilwirkung an der Kante des Dichtrings auftritt. Ferner sind insgesamt drei Lippen vorhanden, die eine verbesserte Dichtfunktion bewirken.

In der älteren DE 199 00 302 ist eine Dichtung beschrieben, bei der eine rückwärtige Andruckdichtung eine vordere Auflauffläche aufweist, auf der bei Einschieben des Spitzendes eines weiteren Rohres eine Lippendichtung zur Anlage kommt und die Andruckdichtung in Einschubrichtung auslenkt.

Die vorgenannten Dichtungen enthalten jeweils einen Verstärkungsring aus Metall oder Kunststoff, der verhindert, daß die Dichtung verlorengeht, aber es andererseits auch ermöglicht, daß die Dichtung bereits herstellerseitig in eine Muffe eingebaut wird.

Schließlich ist es aus der DE 43 27 163 bekannt, eine Ringdichtung mit an der Eingangsseite der Ringsicke einer Muffe anliegender Spannlippe zu versehen, die erhöhte Toleranzwerte der Ringsicke auszugleichen in der Lage ist.

Der Erfindung liegt die Aufgabe zugrunde, einen Dichtring zum Einsetzen in eine Ringsicke einer Muffe eines Rohres anzugeben, welcher mit hoher Festigkeit in der Ringsicke aufgenommen ist, der unabhängig von seiner Einbaustellung verwendet werden kann und der insbesondere auch für große Rohrdurchmesser verwendbar ist.

Diese Aufgabe wird durch die im Anspruch 1 beanspruchte Erfindung gelöst. Vorteilhafte Weiterbildungen der Erfindung sind in Unteransprüchen angegeben.

Bei der Erfindung wird ein Dichtring für eine Steckmuffenverbindung angegeben, der in eine im Querschnitt im wesentlichen rechteckige Ringsicke des Muffenendes eines Rohrendes einsetzbar ist und zwei umlaufende Verstärkungsringe enthält, die in nach innen offenen Ausnehmungen des Dichtrings aufgenommen sind, wobei der Dichtring beidseitig Dichtnasen aufweist und ferner zwei Dichtlippen enthält.

Durch die erfindungsgemäßen Maßnahmen läßt sich erreichen, daß die durch das Spitzendes des einzuschiebenden Rohres abgelenkte erste Lippendichtung auf der Auflauffläche der ersten Andruckdichtung zur Anlage kommt und bei weiterem Einschieben des Rohres die erste Andruckdichtung in Einschieberichtung nach hinten drückt und gleichzeitig zusammendrückt. Hierdurch bleibt die Dichtfunktion der Lippendichtung einerseits erhalten, aber andererseits ist auch eine Dichtfunktion der Andruckdichtung erreichbar. Durch Andrücken der ersten Lippendichtung an die Andruckdichtung wird ferner erreicht, daß die Andruckdichtung auch zusammengedrückt wird, und daher die Druckkraft der Dichtung erhöht wird. Der erfindungsgemäße Dichtring ist bezüglich einer mittleren Radialebene symmetrisch aufgebaut. Eine zweite Lippendichtung verläuft spiegelbildlich zur ersten Lippendichtung. Beim Einschieben eines Rohres in eine mit einer erfindungsgemäßen Dichtung versehene Muffe wird daher die zweite Lippendichtung in Richtung auf die erste Lippendichtung umgelenkt.

Der Dichtring weist auf seiner im Sickengrund anliegenden Außenseite vorzugsweise mehrere umlaufende stegartige Vorsprünge auf. Diese sind in ihrer Höhe so gestaltet, daß auch im zusammengesteckten Zustand zweier Rohre zwischen den Vorsprüngen Freiräume zwischen Dichtrücken und Sickengrund verbleiben. Unterhalb der Verstärkungsringe befinden sich stärker ausgebildete trapezförmige Stützfüße. Der Dichtring bleibt daher auch in diesem Bereich kompressibel, so daß er für große Toleranzbereiche von Rohrsystemen einsetzbar ist. Die Vorsprünge sind vorzugsweise im Querschnitt ebenfalls trapezförmig gestaltet und sind durch bogenförmige Ausnehmungen der Dichtungsaußenseite miteinander verbunden.

Die Erfindung wird nachstehend anhand eines Ausführungsbeispiels näher erläutert. Es zeigen:
- Fig. 1: einen erfindungsgemäßen Dichtring im unbelasteten Zustand,
- Fig. 2: eine erfindungsgemäße Ringdichtung im in einer Ringsicke eingesetzten Zustand, und
- Fig. 3: einen erfindungsgemäßen Dichtring in einer Ringsicke, wobei das Spitzende eines Rohres in die die Ringsicke enthaltende Muffe eingesetzt ist.

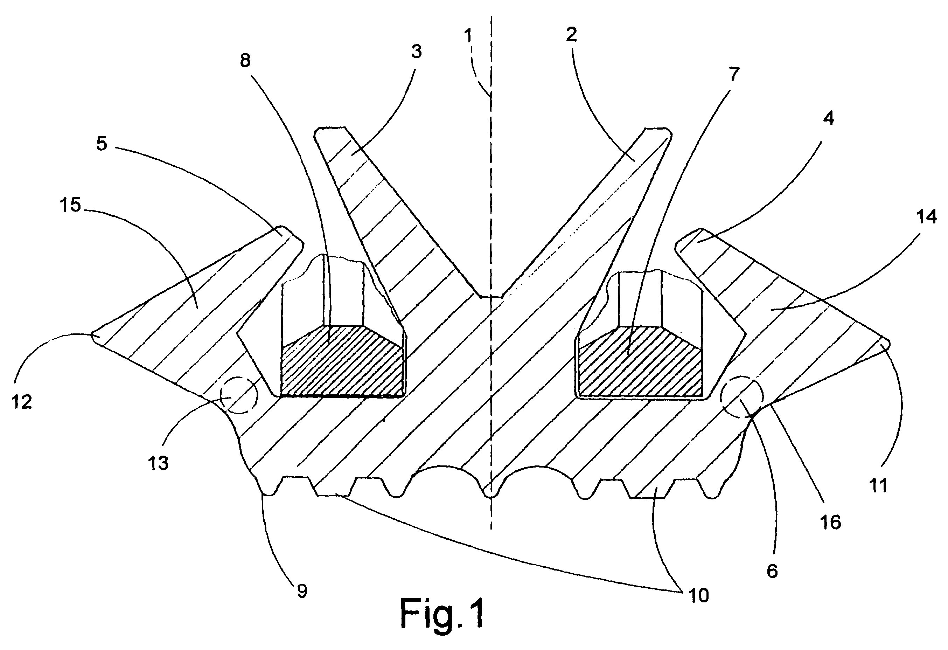

Der in Fig. 1 dargestellte Dichtring ist bezüglich einer Symmetrieebene 1 spiegelbildlich aufgebaut. Auf der rechten Seite der Symmetrieebene 1 befindet sich eine schräg nach innen und zum Inneren der Dichtung gerichtete Lippendichtung 2, welche den ersten Verstärkungsring 7 überragt. Der erste Verstärkungsring 7 ist in einer nach innen offenen Ausnehmung des Dichtrings gesetzt. Zur Vermeidung von Verkeilungsproblemen beim Umlenken der Dichtlippe weist der Verstärkungsring beidseitig innere Fasen auf.

An der der ersten Dichtlippe 2 gegenüberliegende Seite weist der Dichtring ferner eine Andruckdichtung 14 auf, welche oberhalb des Verstärkungsrings 7 in einer Abstreiflippe 4 endet und am von dem Verstärkungsring entfernten Ende eine erste Abdichtnase 11 enthält. Auf der der Symmetrieebene 1 gegenüberliegenden Seite des Dichtrings ist eine zweite Dichtlippe 3 angeordnet, welche gegenüber der Symmetrieebene in einem Winkel verläuft, welcher mit dem Anstellwinkel der ersten Dichtlippe übereinstimmt. Der zweite Verstärkungsring 8 ist ebenfalls in einer nach innen offenen Ausnehmung des Dichtrings aufgenommen. Auch auf dieser Seite des Dichtrings befindet sich eine zweite Andruckdichtung 15 mit einer zweiten Abstreiflippe 5 und einer zweiten Abdichtnase 12.

Auf der im Sickengrund zur Anlage kommenden Seite des Dichtrings befinden sich mehrere äußere Dichtlippen 9. Unterhalb der Verstärkungsringe 7 und 8 befinden sich zwei trapezförmige Stützfüße 10, über die eine erhöhte Andruckkraft Verstärkungsringe auf den Sickengrund ausgeübt werden kann.

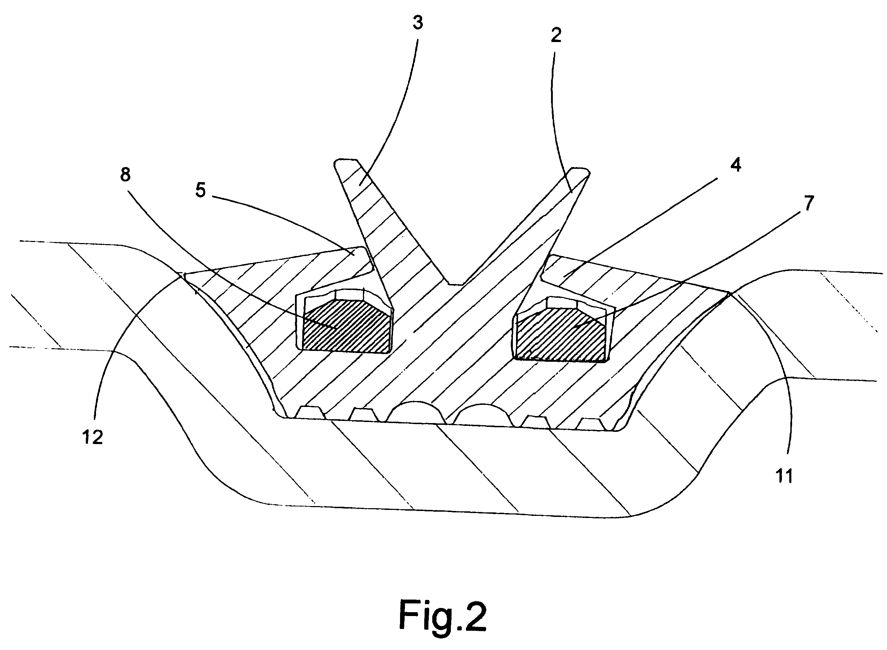

Fig. 2 zeigt den erfindungsgemäßen Dichtring im Zustand, der sich in einer Sicke eines mit einer Muffe versehenes Rohres befindet. Während die ersten und zweiten Dichtlippen 2, 3 unverformt bleiben, sind die ersten und zweiten Andruckdichtungen 14, 15 über die Gelenkbereiche 6, 13 so nach innen abgelenkt, daß die ersten und zweiten Abstreiflippen 4, 5 fast die Abstreiflippen 2. 3 berühren. Die Umlenkung erfolgt insbesondere durch die auf die Abdichtnasen 11, 12 durch die Seitenflanken der Sicke aufgebrachte Druckkraft. Zwischen den Andruckdichtungen 14, 15 und den Seitenflanken der Sicke befindet sich noch ein bogenförmiger Hohlraum 16. Dadurch ergibt sich eine saubere Anlage der Abdichtnasen 11, 12 an den Seitenflanken der Sicke.

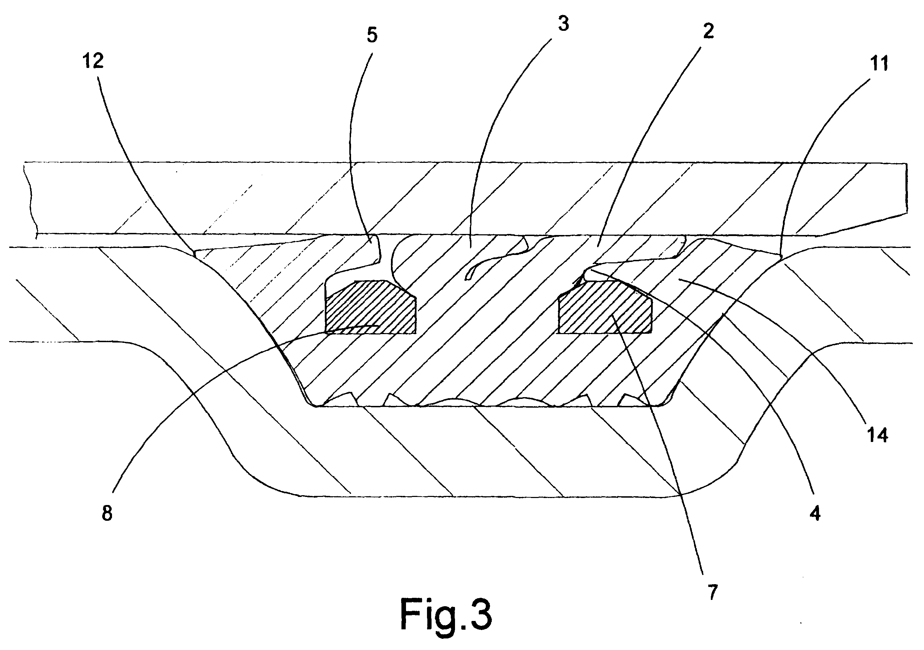

Fig. 3 zeigt den Zustand eines Dichtrings im eingesetzten Zustand, bei dem das Spitzende eines Rohres den Dichtring zusammendrückt. Dabei ist gezeigt, daß die erste Lippendichtung 2 nahezu vollständig auf der ersten Abstreiflippe 4 zur Auflage kommt, wobei die Abstreiflippe zusammen mit der Andruckdichtung 14 zusammengedrückt wird und damit einerseits eine hohe Druckkraft auf die Lippendichtung erzeugt und andererseits die Andruckdichtung 14 so gegen die Seitenflanke des Sickengrundes andrückt, daß die Andruckdichtung den Raum zur Sickenflanke vollständig ausfüllt.

Durch das Einschieben des Spitzendes wird die zweite Dichtlippe 3 in die gleiche Richtung abgelenkt wie die Lippendichtung und kommt zur Auflage auf einem Teilbereich der ersten Dichtlippe 2. Die zweite Andruckdichtung 15 wird ebenfalls über die zweite Abstreiflippe 5 zusammengedrückt, so daß hier ebenfalls kein Hohlraum zwischen Andruckdichtung 15 und Seitenflanke des Sickengrundes verbleibt.

Die Abdichtungsfunktion gegenüber dem Spitzende wird daher dreifach erreicht, nämlich an der zweiten Abstreiflippe 5, an der Dichtlippe 3 und an der ersten Dichtlippe 2. Abhängig von den Toleranzverhältnissen kann sogar noch ein Teilbereich der ersten Andruckdichtung 14 eine Dichtfunktion an dem Spitzende ausüben. Die Seitenflanken des Sickengrundes bleiben über die ersten und zweiten Abdichtnasen 11, 12 abgedichtet. Der Sickengrund wird über mehrere äußeren Dichtlippen, die zum Teil zusammengedrückt sind, abgedichtet. Über die Stützfüße 10 läßt sich eine hohe Andruckkraft der Verstärkungsringe 7, 8 an den Sickengrund erzielen.

Das Vorhandensein von zwei Verstärkungsringen verhindert es vollständig, daß die Dichtung aus der Sicke herausgeschoben werden kann. Der symmetrische Aufbau des Dichtrings erlaubt den wechselweisen Einsatz des Dichtrings in der Sicke. Daher ist ein fehlerhaftes Einsetzen in falscher Orientierung durch den erfindungsgemäßen Dichtring ausgeschlossen.

Der erfindungsgemäße Dichtring ist insbesondere für Kunststoffrohre großen Durchmessers ab 250 mm Durchmesser geeignet, deren Flankenteil der in den Rohren ausgebildeten Sicken relativ flach ist. Durch die Verwendung zweier Dichtungsringe ist verhindert, daß ein zufälliges oder gewolltes Herausnehmen des Dichtrings erfolgt und daß die Andruckkräfte des Dichtrings an den Sickengrund höher als beim Stand der Technik gewählt werden können.

Die Verstärkungsringe können sowohl aus Kunststoff als auch aus Metall hergestellt sein.

### Bezugszeichenliste

- 1: Symmetrieebene
- 2: Lippendichtung
- 3: Lippendichtung
- 4: erste Abstreiflippe
- 5: zweite Abstreiflippe
- 6: erster Drehpunkt
- 7: erster Verstärkungsring
- 8: zweiter Verstärkungsring
- 9: äußere Dichtlippen
- 10: Stützfüße
- 11: erste Abdichtnase
- 12: zweite Abdichtnase
- 13: zweiter Drehpunkt
- 14: erste Andruckdichtung
- 15: zweite Andruckdichtung
- 16: Bogen

## Patentansprüche

1. Dichtring für eine Steckmuffenverbindung zweier Rohre mit einem umlaufenden Verstärkungsring (7), der in einer nach innen gerichteten offenen Ausnehmung des Dichtrings aufgenommen ist, wobei die Dichtung eine schräg zur Symmetrieebene des Dichtrings gerichtete Lippendichtung (2) aufweist, welche beim Zusammenstecken der Rohre ablenkbar ist und an der dem Verstärkungsring gegenüberliegenden Dichtungsseite an einer Abstreiflippe (4) zur Anlage kommt, dadurch gekennzeichnet, daß der Dichtring im Querschnitt spiegelsymmetrisch aufgebaut ist und eine zweite nach innen gerichtete offene Ausnehmung aufweist, in der ein zweiter Verstärkungsring (8) aufgenommen ist, daß eine zweite Lippendichtung (3) vorgesehen ist, die entgegengesetzt schräg zur ersten Lippendichtung (2) gerichtet ist, wobei die Lippendichtungen (2, 3) im unbelasteten Zustand V-förmig verlaufen, und daß die zweite Lippendichtung (3) beim Einschieben eines Rohres in die Muffe in Richtung der ersten Lippendichtung (2) umlenkbar ist.

2. Dichtring nach Anspruch 1, dadurch gekennzeichnet, daß die erste Lippendichtung (2) den zugeordneten Verstärkungsring (7) soweit überragt, daß die durch Einschub eines Rohres auf der ersten Abstreiflippe (4) zur Auflage kommende erste Lippendichtung (2), die die erste Abstreiflippe (4) enthaltende Andruckdichtung (14) so zusammendrückt, daß der Körper der ersten Andruckdichtung (14) gegen die an die Dichtung anschließende Sickenflanke angedrückt wird.

3. Dichtring nach Anspruch 1 oder 2, dadurch gekennzeichnet, daß die Andruckdichtungen (14, 15) auf ihrer den Flanken der Sicke zugewandten Seiten bogenförmig verlaufen, so daß im unbelasteten Zustand der Dichtung die Andruckdichtungen jeweils lediglich mit einer Abdichtnase (11, 12) an den zugeordneten Seitenschenkeln des Sickengrundes anliegen.

4. Dichtring nach einem der vorhergehenden Ansprüche 1 - 3, dadurch gekennzeichnet, daß die am Sickengrund anliegende Außenseite der Dichtung unterhalb der Stützringe (7, 8) mit trapezförmigen Stützfüßen (10) versehen ist.
